# FASCICULE DE BREVET EUROPEEN

(11) **EP 2 683 847 B1**
(45) Date de publication et mention de la délivrance du brevet: **10.06.2020**
(21) Numéro de dépôt: 12712339.6
(22) Date de dépôt: 07.03.2012
(51) Int. Cl.: C23C 24/08, C23C 28/00

(54) **PROCÉDÉ DE RÉALISATION D'UNE BARRIÈRE THERMIQUE DANS UN SYSTÈME MULTICOUCHE DE PROTECTION DE PIÈCE METALLIQUE ET PIÈCE MUNIE D'UN TEL SYSTÈME DE PROTECTION**
VERFAHREN ZUR BEREITSTELLUNG EINER WÄRMEDÄMMUNG IN EINEM MEHRFACHSCHICHTSYSTEM ZUM SCHUTZ EINES METALLGEGENSTANDS UND METALLGEGENSTAND, AUSGESTATTET MIT EINEM SOLCHEN SCHUTZSYSTEM
PROCESS OF PROVIDING A THERMAL BARRIER IN A MULTILAYER SYSTEM OF PROTECTION OF A METALLIC ARTICLE AND ARTICLE EQUIPPED WITH SUCH SYSTEM OF PROTECTION

(30) Priorité: 07.03.2011 FR 1151836
(43) Date de publication de la demande: 15.01.2014
(73) Titulaire: Safran Aircraft Engines, 75015 Paris (FR); Centre National de la Recherche Scientifique (C.N.R.S.), 75794 Paris Cedex 16 (FR); Institut National Polytechnique de Toulouse (INPT), 31029 Toulouse Cedex 4 (FR); Universite Paul Sabatier Toulouse III - Upst III, 31062 Toulouse Cedex 9 (FR)
(72) Inventeur: HUGOT, Juliette, F-86130 Jaunay-Clan (FR); BOIDOT, Mathieu, F-31400 Toulouse (FR); MONCEAU, Daniel, F-31560 Nailloux (FR); OQUAB, Djar, F-31280 Mons (FR); ESTOURNES, Claude, F-31370 Rieumes (FR)
(74) Mandataire: Gevers & Orès
(86) Numéro de dépôt international: PCT/FR2012/050470
(87) Numéro de publication internationale: WO 2012/120235

(56) Documents cités:
- WO-A1-2007/112783
- FR-A1- 2 941 965
- BOIDOT M ET AL: "Proto-TGO formation in TBC systems fabricated by spark plasma sintering", SURFACE AND COATINGS TECHNOLOGY, vol. 205, no. 5, 25 septembre 2010 (2010-09-25), pages 1245-1249, XP027507472, ELSEVIER, AMSTERDAM [NL] ISSN: 0257-8972, DOI: 10.1016/J.SURFCOAT.2010.09.042 [extrait le 2010-09-25]
- SONG J ET AL: "Simultaneous synthesis by spark plasma sintering of a thermal barrier coating system with a NiCrAlY bond coat", SURFACE AND COATINGS TECHNOLOGY, vol. 205, no. 5, 25 août 2010 (2010-08-25) , pages 1241-1244, XP027507471, ELSEVIER, AMSTERDAM [NL] ISSN: 0257-8972, DOI: 10.1016/J.SURFCOAT.2010.08.064 [extrait le 2010-08-20]

## Description

### DOMAINE TECHNIQUE

L'invention concerne un procédé de réalisation d'une barrière thermique dans un système de protection multicouche d'une pièce métallique en superalliage. Elle se rapporte également à une pièce métallique en superalliage munie d'un tel système de protection.

Le domaine de l'invention est le développement de matériaux réfractaires aptes à constituer des pièces thermomécaniques, en particulier des pièces de turbine HP (haute pression), telles que des aubes mobiles ou des distributeurs.

L'amélioration continue du rendement des turbines à gaz modernes impose l'utilisation de températures en entrée de turbine toujours plus élevées et donc l'utilisation de matériaux encore plus réfractaires.

### ÉTAT ANTERIEUR DE LA TECHNIQUE

L'art antérieur comprend les documents Boidot et al « proto-TGO formation in TBC systems fabricated by spark plasma sintering », Song J et al « Simultaneous synthesis by spark plasma sintering of a thermal barrier coating system with NiCrAlY bond coat », WO-A1-2007/112783 et FR-A1-2941965 qui décrivent des systèmes de protection de pièce.

Pour résister à des températures élevées, des pièces de superalliages à base de nickel (Ni) et d'aluminium (Al) ont été développés : des superalliages équiaxes, puis à solidification dirigée, et enfin monocristallins. Cependant, le développement de ces superalliages est maintenant insuffisant pour satisfaire les exigences toujours croissantes des pièces hautes températures en durée de vie. Typiquement, la température limite d'utilisation des superalliages est d'environ 1100°C alors que la température des gaz en entrée de combustion ou en sortie de turbine peut largement dépasser 1600°C.

Dans ce but, des revêtements isolants thermiques pour ces superalliages sont apparus, permettant d'abaisser la température du métal des pièces refroidies par convection interne. Ces revêtements isolants thermiques, dits barrières thermiques ou encore BT, sont en général constitués d'une couche externe en céramique, à base d'oxyde de zirconium (ou zircone) stabilisée par de l'oxyde d'yttrium (ou yttrine) - encore appelée zircone yttriée - déposée sur une sous-couche métallique de liaison. La sous-couche est destinée à fournir l'adhérence au revêtement céramique tout en protégeant le métal de la pièce de l'oxydation et de la corrosion.

La sous-couche métallique peut être formée par un dépôt galvanique de platine, suivie d'une aluminisation en phase vapeur. Sur cette sous-couche est ensuite déposée la couche céramique isolante de zircone yttriée soit par projection thermique - la microstructure du dépôt obtenu est alors de type lamellaire - soit par vaporisation du matériau sous faisceau d'électrons - la microstructure du dépôt obtenu est alors de type colonnaire.

Afin d'améliorer les performances des revêtements BT en tenue à l'oxydation/corrosion à haute température, des compositions de sous-couches métalliques ont été développées, par exemple des sous-couches de compositions de type Ni₍₁₋ₓ₎PtₓAl (nickel-platine-aluminium). Le dépôt de platine sur la pièce est réalisé par électrolyse, le dépôt d'aluminium par voie chimique (CVD) ou par dépôt physique en phase vapeur (PVD).

D'autres développements ont porté sur l'amélioration de la couche céramique, en particulier sur la formation de la couche en zircone yttriée par le procédé sol-gel ou le traitement par plasma froid.

### EXPOSÉ DE L'INVENTION

Les revêtements BT fournis par ces développements restent limités en termes de performance et de durée de vie, en particulier en ce qui concerne la tenue à l'oxydation/corrosion. Par ailleurs, la reproductibilité des méthodes utilisées n'est pas sûre, en particulier pour réaliser le revêtement à sous-couche Ni₍₁₋ₓ₎PtₓAl. De plus, les méthodes mises en œuvre nécessitent un nombre important d'opérations délicates et longues.

L'invention vise précisément à pallier ces inconvénients en proposant un procédé permettant de réaliser des compositions de BT améliorées, encore plus réfractaires et de tenue en oxydation et corrosion sensiblement meilleure.

Pour ce faire, le procédé de l'invention comme défini dans la revendication 1 réalise, à partir d'un empilement de couches céramiques particulières, chaque couche ayant des propriétés et des fonctions spécifiques, différentes voire opposées d'une couche à l'autre, et en une seule étape, des couches de revêtement par l'application d'une technologie de frittage assisté sous champ (Field Assisted Sintering Technology - FAST - pour la terminologie anglaise) en l'occurrence la technologie de Frittage Flash (Spark Plasma Sintering ou SPS - pour la terminologie anglaise).

La technologie SPS combine, simultanément, l'application d'une pression uniaxe et des impulsions de courant continu dans un environnement contrôlé (sous vide ou gaz particuliers). Cette technologie est connue dans le domaine de la métallurgie des poudres car elle permet, par compaction et frittage, de fabriquer des pièces métalliques ou d'oxydes à partir de poudres. En particulier, la mise en œuvre de la technologie SPS permet de fabriquer des pièces de microstructures contrôlées au niveau de la taille de grains et de la porosité.

Plus précisément, la présente invention a pour objet un procédé de réalisation d'une barrière thermique dans un système de protection multicouche d'une pièce métallique en superalliage. Le procédé consiste à produire un traitement thermique par frittage flash de matériaux de protection en couches superposées, dans une enceinte de machine SPS. Ces couches comportent sur un substrat de superalliage, au moins deux couches de céramiques réfractaires à base de zircone, une première couche de céramique, dite interne, compatible chimiquement et thermiquement avec le substrat et une dernière couche de céramique, dite externe, disposée par-dessus les autres couches. Cette couche externe présente des propriétés de résistance physicochimique vis-à-vis des polluants externes de type CMAS et/ou thermique supérieure à celles de la couche interne.

La résistance physicochimique se traduit en particulier par un coefficient de mouillage entre les polluants et la couche externe suffisant pour empêcher l'étalement et la pénétration des polluants fondus sur la couche externe. Avantageusement, la couche externe peut contenir un élément, en particulier le cérium ou un autre élément de la famille des terres rares qui, en cas d'interaction chimique avec des polluants, augmente la température de fusion de ces derniers.

De préférence, les matériaux sont choisis pour que les coefficients de dilatation soient suffisamment élevés pour suivre la dilatation du superalliage qui reste le plus froid.

Avantageusement, un assemblage de feuilles métalliques formant une sous-couche métallique peut être disposé entre le substrat de superalliage et les couches de céramique.

De préférence, la couche interne peut présenter un coefficient de dilatation thermique sensiblement plus élevé que celui de la dernière couche de céramique - en particulier un coefficient de dilatation thermique compris entre celui du substrat et celui de la dernière couche de céramique - et la couche externe de la barrière thermique peut présenter une température de frittage naturel ainsi qu'une température limite d'utilisation sensiblement supérieure à celles de la couche interne.

Plus particulièrement, les propriétés de résistance physicochimique de la couche externe se rapportent, au frittage, à la corrosion, à l'érosion et/ou l'aérodynamisme, ces propriétés étant mises en œuvre par un choix des céramiques se rapportant respectivement à une conductivité thermique, une porosité, une dureté et/ou une rugosité appropriée(s) et renforcée(s) par le traitement thermique de la machine SPS. La couche externe présente alors par rapport à la couche interne au moins l'une des propriétés choisies parmi : une dilatation thermique plus faible, une dureté plus élevée, une conductivité thermique plus faible, une température de frittage sensiblement supérieure, une porosité ouverte plus faible et/ou une rugosité plus faible.

En particulier, des porosités de la barrière thermique comprise entre 15 et 25%, avec une porosité inférieure à 15% pour la couche externe, sont préférées. La rugosité de la couche externe est de préférence inférieure à 10 micromètres.

La barrière thermique présente en effet, de par la formation des gradients de composition et de porosité, un gradient de passage entre la fonction exercée par chacune des couches céramiques prise séparément, en rapport avec leurs caractéristiques relatives : la couche interne favorise un ancrage sur la sous-couche métallique - en particulier sur une couche d'alumine qui se forme en surface de la sous-couche métallique - grâce à son coefficient de dilatation en adéquation avec les propriétés thermiques de cette sous-couche et de celles de la couche d'alumine. Il en résulte une accommodation des contraintes entre la sous-couche, la couche d'alumine et la couche de céramique interne. La couche externe réalise une protection thermique supérieure dans les conditions d'utilisation, en particulier dans les turbines, par son caractère plus réfractaire que la couche interne, ainsi que sa résistance au frittage et sa température limite d'utilisation supérieures.

D'autres propriétés de résistance (érosion, corrosion) et d'amélioration aérodynamique par lissage de la couche externe, peuvent être également mises en œuvre par le choix du matériau de la couche externe ou des couches supplémentaires appropriées. En particulier, un matériau de dureté élevée permet une meilleure résistance à l'érosion. Un matériau de faible porosité ouverte permet une meilleure résistance à la corrosion haute température (par exemple à la pollution de type CMAS, oxydes de calcium, de magnésium et d'aluminosilicates). Un matériau à petits grains permet d'obtenir une faible rugosité et donc permet d'améliorer les propriétés aérodynamiques.

Selon des modes de mise en œuvre particuliers, l'enceinte étant équipée de moyens de mise en pression et de moyens électriques de passage de courant pulsé, la mise en pression et le passage du courant pulsé sont effectués, dans une étape de réalisation, selon un cycle de frittage flash réglé en température, en pression et en durées, avec un palier de température situé entre 1000 et 1600°C, de préférence entre 1100 et 1400°C, et un palier de pression situé entre 15 et 150 MPa, de préférence entre 10 et 100MPa, de sorte que la barrière thermique présente un gradient de composition, de porosité, et de fonction d'une part d'ancrage à la sous-couche métallique et d'autre part de protection et/ou de lissage (en d'autres termes : de rugosité) externe.

L'invention se rapporte également à une pièce métallique en superalliage munie d'un système de protection comportant une barrière thermique comme définie dans la revendication 9 et réalisée selon le procédé de frittage flash ci-dessus. La pièce métallique comporte alors un substrat, constitué d'un superalliage à base de nickel, une sous-couche métallique présentant des phases béta-(Ni,Pt)Al et/ou alpha-NiPtAI enrichies en platine, une couche d'oxyde d'aluminium formée par croissance thermique ou TGO (initiales de « Thermally Grown Oxide » en terminologie anglaise) lors de la réalisation de la pièce par frittage flash, et une barrière thermique formée par ledit procédé à partir d'au moins deux couches en céramique à base de zirconium, compatibles chimiquement et thermo-mécaniquement, et présentant une face externe. Une première couche de céramique, dite interne, disposée au plus près de la sous-couche métallique, est compatible chimiquement et thermiquement avec cette sous-couche, et une dernière couche de céramique externe, disposée au plus près de la face externe de la barrière, cette dernière couche étant apte à présenter des propriétés de résistance physicochimique et/ou thermique supérieure à celles de la couche interne.

De préférence, la céramique interne est apte à présenter un coefficient de dilatation sensiblement plus élevé que celui de la céramique externe, disposée au plus près de la face externe de la barrière. Cette céramique externe présente avantageusement une conductivité thermique sensiblement plus faible que la céramique interne, une température de frittage naturel et/ou une température limite d'utilisation sensiblement supérieures à celles de la céramique interne. La barrière thermique présente un gradient de composition et de porosité de la sous-couche métallique jusqu'à la face externe, et de fonctions d'une part d'ancrage à la sous-couche métallique et d'autre part de protection et/ou de lissage de la face externe.

Dans ces conditions, la barrière thermique présente, outre les propriétés de stabilité thermique, de faible conductivité thermique, de coefficient de dilatation thermique proche de celui du substrat et de bonne résistance au frittage, une résistance à la corrosion par une inertie chimique vis-à-vis des oxydes de calcium, magnésium, et aluminosilicates grâce à sa microstructure granulaire à porosité isotrope, une résistance à l'érosion et de bonnes propriétés aérodynamiques, ainsi qu'une excellente adhérence sur la couche TGO.

Les pièces métalliques plus particulièrement visées, mais non exclusivement, sont les pièces de turbine ou de compresseur de turbine à gaz, en particulier les aubes de redresseur, de distributeur ou de chambre de combustion.

Selon l'nvention :
- les céramiques sont choisies parmi des composés « YSZ » de zircone (ZrO₂) partiellement stabilisée à l'yttrine (Y₂O₃), des composés « GYSZ » de YSZ dopés en oxyde de gadolinium (Gd₂O₃), des composés « LZ » de zirconate de lanthane (La₂Zr₂O₇), et des composés « LZC » de zirconates de lanthane partiellement cériés ;
- les céramiques interne/externe sont avantageusement choisies parmi les couples : xYSZ/LZ avec un pourcentage x en masse d'yttrine supérieur ou égal à 7%, xYSZ/LZC et xYSZ/ GYSZ, en particulier x = 7 et x = 8.

Selon un mode particulier :
- les composés LZC sont LZyC(1-y), avec y = 70%, y et 1-y représentant les pourcentages complémentaires de zirconium et de cérium du zirconate partiellement cérié, et les composés de YSZ dopés sont tGvYSZ, avec un pourcentage en masse d'oxyde de gadolinium égal à 2% et un pourcentage v en masse d'YYSZ égal à 8%.

### BRÈVE DESCRIPTION DES FIGURES

D'autres caractéristiques et avantages de l'invention ressortiront à la lecture de la description qui suit et qui se rapporte à un exemple de réalisation, en référence aux figures annexées qui illustrent :
- la figure 1, une vue en coupe partielle schématique d'un outillage SPS, comportant une matrice et des pistons, dans laquelle un exemple d'assemblage de couches d'un échantillon de pièce métallique selon l'invention a été introduit pour la réalisation d'un frittage flash ;
- la figure 2, un exemple de diagrammes de cycles de réglage en température et pression en fonction du temps pour le frittage flash de l'assemblage précédent, et
- la figure 3, une vue en coupe d'un échantillon selon la figure 1 après la réalisation du frittage flash.

### EXPOSÉ DETAILLÉ

Les termes « vertical » et « horizontal », « supérieur » ou « inférieur » et leurs dérivés, se rapportent aux éléments tels que représentés sur les figures, c'est-à-dire en mode d'utilisation.

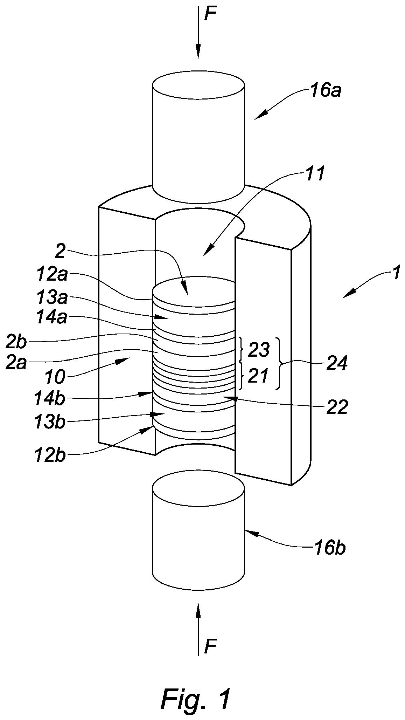

La figure 1 illustre une vue schématique en coupe partielle verticale d'un outillage SPS 1, mise sous vide en utilisation. L'outillage 1 comporte une matrice creuse en graphite 10 enveloppant une chambre cylindrique 11. Dans cette chambre, un assemblage de couches 2 d'un échantillon de pièce métallique selon l'invention a été introduit pour la réalisation d'un frittage flash. Les couches ici illustrées sont circulaires pour former un pion afin de mettre en évidence les structures obtenues après frittage. L'invention s'étend à la réalisation de toute pièce de forme géométrique adaptée à leur utilisation en utilisant une chambre ou un moule de géométrie appropriée.

Des contacts électriques 12a, 12b et 14a, 14b sont agencées dans la chambre 11, de part et d'autre de l'assemblage 2. Les contacts 12a et 14a, respectivement 12b et 14b, sont disposés de part et d'autre d'une barrière électrique 13a, respectivement 13b, constituée dans le cas présent d'une poudre d'alumine. Ces contacts sont en graphique souple, par exemple en papyex®. Ce matériau empêche la pollution du moule et facilite le démoulage. Les barrières électriques permettent de limiter le passage du courant dans l'assemblage 2 qui passe alors principalement par la matrice 10.

L'outillage comporte également des bornes en graphite de mise sous tension électrique, 16a et 16b, d'axes longitudinaux verticaux. Ces bornes servent également de pistons qui viennent en compression sur les contacts 14a et 14b, de part et d'autre de l'assemblage 2, par l'exercice d'une charge externe (flèches F).

L'assemblage 2 est plus précisément constitué d'un empilement de feuilles métalliques, constituant une sous-couche métallique 21 entre un substrat de superalliage 22 et des couches céramiques 2a, 2b, et d'une barrière thermique 23 déposée en poudre de céramiques sur les feuilles constituant la sous-couche 21 pour former un système de protection 24 du substrat 22.

Dans l'exemple, le substrat 22 est un superalliage « AM1 » à base de Ni et comportant du tantale (Ta), chrome (Cr), cobalt (Co), tungstène (W), aluminium (Al), molybdène (Mo) et titane (Ti). Sur ce substrat, la sous-couche métallique 21 est constituée d'une succession de feuilles de platine de 5 µm d'épaisseur et d'aluminium de 2 µm d'épaisseur. La barrière thermique 23 est constituée des deux couches de céramiques 2a et 2b, ajoutées successivement sous forme de poudres sur la sous-couche 21.

Dans l'exemple, la couche 2a dite interne est constituée d'une poudre de céramique 8YSZ, c'est-à-dire, de zircone stabilisée à 8% massique d'Yttrine. La couche 2b dite externe est constituée d'une poudre de céramique 2G8YSZ, c'est-à-dire, de Zircone (ZrO2) partiellement stabilisée à l'yttrine (8% en masse) et dopée à l'oxyde de gadolinium (GdO2) ou Gd à 2% en masse.

Dans d'autres exemples, les couches 2a/ et 2b sont constituées de poudres de céramique, respectivement 7YSZ/LZ et 7YSZ/LZ7C3 (c'est-à-dire avec 70% de zirconium et, de manière complémentaire, 30% de cérium).

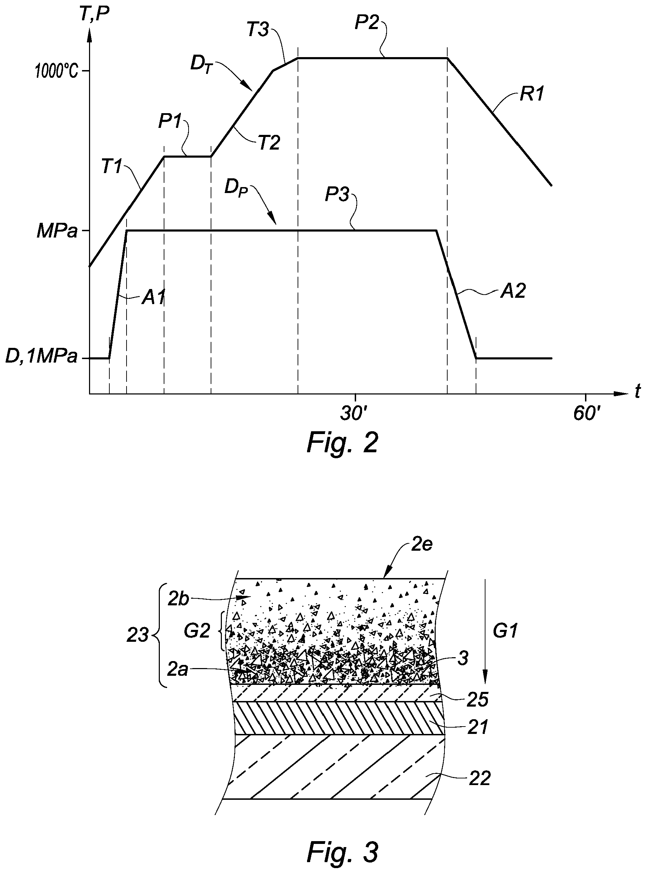

Pendant l'opération de frittage flash, les cycles de réglage en température « T » et pression « P » en fonction du temps « t » suivent les diagrammes de la figure 2. Le diagramme de température D_{T} atteint un premier palier P1 de 700°C après une montée en température T1 avec une rampe de 100°C par minute. Le premier palier P1 dure environ 10 minutes et est suivi d'une deuxième montée en température T2 de même rampe, pendant environ 10 minutes.

Cette deuxième montée est suivie d'une troisième montée T3 de pente (50°C/min) et de durée (environ 5 minutes) plus faibles pour atteindre le deuxième palier ou palier principal P2. Ce deuxième palier P2 se situe dans l'intervalle 1100-1200°C et dure environ 15 minutes. Un refroidissement contrôlé en température R1 est effectuée pendant environ 30 minutes avec une pente de l'ordre de 20°C par minute pour atteindre environ 500°C. Ce cycle dure environ une heure. Cette première descente en température est suivie d'un deuxième refroidissement naturel pour atteindre la température ambiante.

Le diagramme de pression D_{P} montre une augmentation de pression extrêmement rapide A1 à partir de la pression atmosphérique de 0,1 MPa pour atteindre 100 MPa dans l'exemple. Un palier en pression P3 est maintenu et dure pendant une grande partie de l'opération, par exemple pendant 40 à 50 minutes. La chute de pression A2 est opérée pendant un temps très court pour revenir à la pression atmosphérique.

Un échantillon de pièce métallique en 3 dimensions revêtue d'un système de protection selon l'invention par un frittage flash est illustré par la vue en coupe de la figure 3. Il se compose du substrat en superalliage 22 recouvert d'un système de protection comportant, en couches successives, la sous-couche métallique 21, une couche d'alumine 25, dite couche « TGO », et de la barrière thermique 23 composée des céramiques interne 2a et externe 2b, initialement en couches séparées avant l'opération de frittage flash.

La céramique externe 2b présente une conductivité thermique relativement faible, entre 0,8 et 1,7 Wm⁻¹K⁻¹ avant consolidation et moins de 0,8 après élaboration.

De plus, les températures limite d'utilisation des céramiques 2b et 2a sont respectivement égales à 1200°C et 1600 °C et plus. Par ailleurs, la céramique externe 2b ne présente pas de frittage naturel jusqu'à des températures de 1600°C ou plus.

De plus, la céramique externe 2b a avantageusement un coefficient de dilatation sensiblement plus élevé que celui de la céramique interne 2a, qui est de 10,4.10⁻⁶K⁻¹. L'écart entre ces coefficients de dilatation régit la durée de vie de l'assemblage, en particulier de l'accrochage de la céramique sur l'oxyde TGO qui s'est formé en cours de frittage SPS.

Par ailleurs, les granulométries des poudres initiales des deux céramiques ont été choisies de sorte que la couche interne soit finalement moins dense que la couche externe. La couche externe plus dense peut alors stopper plus facilement les polluants de type CMAS (oxydes de calcium, de magnésium et d'aluminosilicates) qui ne peuvent pas la pénétrer. La couche interne moins dense accommode alors plus facilement les déformations du substrat et des sous-couches.

Par ailleurs les propriétés thermiques de la céramique externe 2b permettent une bonne résistance dans les conditions d'utilisation, en particulier dans les turbines où les températures de gaz peuvent atteindre 1600°C ou plus.

Sur la figure 3, apparaît également le gradient de porosité G1 de la barrière thermique 23, par une augmentation de la taille des pores 3 des couches de la barrière thermique 23 depuis la face externe 2e jusqu'à la couche de TGO. Un gradient de composition G2 en céramique de la barrière 23 par l'interpénétration des couches initiales de céramiques 2a et 2b dans une zone intermédiaire de la barrière 23. Ces gradients induisent un gradient progressif de variation des propriétés initiales des deux céramiques entre la couche de TGO, où les propriétés sont celles de la couche interne initiale 2a, jusqu'à la face externe 2e, où les propriétés sont celles de la couche initiale 2b. Il s'ensuit un gradient progressif des propriétés et donc des fonctions de la barrière thermique 23, allant d'une compatibilité avec la sous-couche métallique à une fonction de protection thermique en face externe 2e.

L'invention n'est pas limitée aux exemples décrits et représentés. Il est par exemple possible de combiner plus de deux couches initiales de céramiques, par exemple trois ou quatre couches de céramiques compatibles chimiquement et thermo-mécaniquement. Avantageusement, ces couches présentent des propriétés et fonctions thermiques variant dans un même sens entre la première couche interne au plus près de la sous-couche métallique, à la couche externe déposée par dessus les autres couches. La première couche interne présente les propriétés thermo-mécaniques en adéquation avec celles de la sous-couche métallique, et la dernière couche externe présente les propriétés thermiques les plus résistantes vis-à-vis d'une utilisation dans des conditions de température égales ou supérieures à environ 1600°C. Il est également possible d'ajouter une couche uniquement destinée à protéger l'assemblage contre la corrosion par les CMAS et/ou à améliorer l'aérodynamique en lissant la barrière thermique.

## Revendications

1. Procédé de réalisation d'une barrière thermique (23) dans un système de protection multicouche (24) sur une pièce métallique en superalliage avec une couche d'oxyde (25) formée par croissance thermique lors de la réalisation du procédé, **caractérisé en ce que** le procédé consiste à :
- fournir un assemblage de couches de matériaux,
- introduire cet assemblage dans une enceinte (11) de machine SPS,
- produire une opération par frittage flash de l'assemblage,
l'assemblage de couches comportant un substrat de superalliage (22) à base de nickel, une sous-couche métallique (21) et une barrière thermique (23), la barrière thermique (23) comprenant au moins deux couches de céramiques réfractaires à base de zirconium (2a, 2b), avec une première couche de céramique (2a) interne et une deuxième couche de céramique (2b) externe disposée par-dessus la première couche de céramique (2a) interne, la première et la deuxième couche de céramique (2a, 2b) interne et externe étant compatibles chimiquement et thermiquement, la barrière thermique présentant au moins un gradient de composition (G2) et de porosité (G1) avec une taille de pores augmentant de la deuxième couche de céramique (2b) externe à la première couche de céramique (2a) interne,
la deuxième couche de céramique externe (2b) étant configurée pour présenter des propriétés de résistance physicochimique vis-à-vis des polluants de type oxydes de calcium, de magnésium et d'aluminosilicates et/ou thermique qui sont supérieure à celles de la première couche de céramique interne (2a),
les première et deuxième couches de céramiques (2a, 2b) interne et externe étant choisies parmi des composés de zircone partiellement stabilisée à l'yttrine (« YSZ »), des composés de zircone partiellement stabilisée à l'yttrine dopés en oxyde de gadolinium (« GYSZ »), des composés de zirconate de lanthane (La₂Zr₂O₇) (« LZ »), et des composés de zirconates de lanthane partiellement cériés (« LZC »), et
les première et deuxième couches de céramiques (2a, 2b) interne/externe étant choisies parmi les couples :
- xYSZ/LZ avec un pourcentage x en masse d'yttrine supérieur ou égal à 7% en masse,
- xYSZ/LZC avec un pourcentage x en masse d'yttrine égal à 7% et
- xYSZ /GYSZ, avec un pourcentage x en masse d'yttrine égal 8 %.

2. Procédé selon la revendication 1, **caractérisé en ce que** la première couche de céramique (2a) interne présente un coefficient de dilatation thermique supérieur à celui de la deuxième couche de céramique (2b) externe.

3. Procédé selon l'une des revendications 1 ou 2, **caractérisé en ce que** les propriétés de résistance physicochimique de la deuxième couche de céramique (2b) externe se rapportent au frittage, à la corrosion, à l'érosion et/ou l'aérodynamisme, ces propriétés étant mises en œuvre par un choix des céramiques se rapportant respectivement à une conductivité thermique, une porosité, une dureté et/ou une rugosité appropriée(s) et renforcée(s) par le traitement thermique de la machine SPS, de sorte que la deuxième couche de céramique (2b) externe présente au moins:
- une dilatation thermique plus faible que celle de la première couche de céramique (2a) interne, et/ou
- une dureté plus élevée que celle de la première couche de céramique (2a) interne, et/ou,
- une conductivité thermique plus faible que celle de la première couche de céramique (2a) interne, et/ou
- , une température de frittage sensiblement supérieure, que celle de la première couche de céramique (2a) interne, et/ou
- une porosité ouverte plus faible que celle de la première couche de céramique (2a) interne, et/ou
- une rugosité plus faible que celle de la première couche de céramique (2a) interne.

4. Procédé selon l'une quelconque des revendications précédentes, **caractérisé en ce que** la sous-couche métallique (21) est disposé entre le substrat de superalliage (22) et la barrière thermique comprenant les première et deuxième couches de céramique interne et externe (2a, 2b), la sous couche métallique comprenant un empilement de feuilles métalliques.

5. Procédé selon l'une quelconque des revendications précédentes, **caractérisé en ce que** l'enceinte (11) est équipée de moyens de mise en pression et mise sous tension électrique (16a, 16b) ainsi que de contacts électriques (12a, 14a ; 12b, 14b) de passage de courant pulsé dans l'enceinte (11), la mise en pression et le passage simultanée du courant pulsé de l'opération de frittage flash sont effectués selon un cycle de frittage flash (D_{T}, D_{P}) réglé en température, en pression et en durées.

6. Procédé selon la revendication 5, **caractérisé en ce que** l'opération comprend un deuxième palier de température (P2) situé entre 1100 et 1200°C et un palier de pression (P3) situé entre 15 et 150 MPa, de préférence entre 10 et 100MPa, de sorte que la barrière thermique (23) présente des gradients de composition (G2), de porosité (G1), et de fonction d'une part d'ancrage à la sous-couche métallique (21) et d'autre part de protection et/ou de lissage externe.

7. Procédé selon la revendication précédente, **caractérisé en ce que** l'opération de frittage comprend préalablement au deuxième palier de température :
- une première montée en température avec un premier palier (P1) de température de 700°C avec une rampe de 100°C par minute, le premier palier (P1) présentant une durée de l'ordre dix minutes,
- une deuxième montée en température, suivant le premier palier, avec une rampe de 100°C par minute pendant une durée de l'ordre de dix minutes, et,
- une troisième montée en température avec une rampe de 50°C par minute et d'une durée de l'ordre de cinq minutes.

8. Procédé selon la revendication 7, **caractérisé en ce que** le palier de pression (P3) est appliqué pendant la durée du premier palier (P1).

9. Pièce métallique en superalliage munie d'un système de protection comportant une barrière thermique et réalisée selon le procédé conforme à l'une quelconque des revendications précédentes, **caractérisée en ce que** la pièce métallique comporte :
- un substrat (22) de superalliage à base de nickel,
- une sous-couche métallique (21) présentant des phases béta-(Ni,Pt)Al et/ou alpha-NiPtAI enrichies en platine,
- une couche d'oxyde TGO (25) formée par croissance thermique lors de la réalisation de la pièce par frittage flash, et
- une barrière thermique (23) formée par ledit procédé à partir d'au moins deux couches en céramique à base de zirconium (2a, 2b)r avec une première couche de céramique (2a) interne et une deuxième couche de céramique (2b) externe disposée sur la première couche de céramique (2a) interne,
la première et la deuxième couches de céramique (2a, 2b) interne et externe étant compatibles chimiquement et thermiquement,
la barrière thermique présentant au moins un gradient de composition (G2) et de porosité (G1) avec une taille de pores augmentant de la deuxième couche de céramique (2) externe à la première couche de céramique (2a) interne,
la deuxième couche de céramique (2b) externe étant configurée pour présenter des propriétés de résistance physicochimique et/ou thermique qui sont supérieures à celles de la première couche de céramique (2a) interne,
les première et deuxième couches de céramiques (2a, 2b) interne et externe sont choisies parmi des composés de zircone partiellement stabilisée à l'yttrine (« YSZ »), des composés de zircone partiellement stabilisée à l'yttrine dopés en oxyde de gadolinium (« GYSZ »), des composés de zirconate de lanthane (La₂Zr₂O₇) (« LZ »), et des composés de zirconates de lanthane partiellement cériés (« LZC »), et
les première et deuxième couches de céramiques (2a, 2b) interne/externe étant choisies parmi les couples :
- xYSZ/LZ avec un pourcentage x en masse d'yttrine supérieur ou égal à 7% en masse,
- xYSZ/LZC avec un pourcentage x en masse d'yttrine égal à 7% et
- xYSZ /GYSZ, avec un pourcentage x en masse d'yttrine égal 8 %.

10. Pièce métallique selon la revendication précédente, **caractérisée en ce que** la première couche de céramique (2a) interne présente un coefficient de dilatation thermique plus élevé que celui de la deuxième couche de céramique (2b) externe, la deuxième couche de céramique (2b) externe présentant une conductivité thermique inférieure à celle de la première couche de céramique (2a) interne, une température de frittage naturel et/ou une température limite d'utilisation supérieures à celles de la première couche de céramique (2a) interne.

11. Pièce métallique selon la revendication 9 ou 10, **caractérisée en ce que** la barrière thermique (23) présente un gradient de composition et de porosité (3) de la sous-couche métallique (21) jusqu'à la face externe (2e), et de fonctions d'une part d'ancrage à la sous-couche métallique (21) et d'autre part de protection et/ou de lissage de la face externe (2e).

12. Pièce métallique selon l'une des revendications 9 ou 10, **caractérisée en ce que** les composés LZC sont LZyC(1-y), avec y = 70%, y et 1-y représentant les pourcentages complémentaires de zirconium et de cérium du zirconate partiellement cérié, et les composés de YSZ dopés sont tGvYSZ, avec un pourcentage t en masse d'oxyde de gadolinium égal à 2% et un pourcentage v en masse d'YSZ égal à 8 % en masse.

## Patentansprüche

1. Verfahren zur Herstellung einer Wärmesperre (23) in einem mehrschichtigen Schutzsystem (24) auf einem Metallteil aus einer Superlegierung mit einer Sauerstoffschicht (25), die durch Wärmeexpansion bei der Durchführung des Verfahrens gebildet wird, **dadurch gekennzeichnet, dass** das Verfahren aus Folgendem besteht:
- Bereitstellen einer Zusammensetzung von Materialschichten,
- Einbringen dieser Zusammensetzung in eine Einschließung (11) einer SPS-Maschine,
- Vornehmen eines Vorgangs durch Spark-Plasma-Sintern der Zusammensetzung,
wobei die Zusammensetzung von Schichten ein Superlegierungssubstrat (22) auf Nickelbasis, eine metallische Unterschicht (21) und eine Wärmesperre (23) umfasst, wobei die Wärmesperre (23) mindestens zwei feuerfeste Keramikschichten auf Basis von Zirkonium (2a, 2b) umfasst, mit einer ersten inneren Keramikschicht (2a) und einer zweiten äußeren Keramikschicht (2b), die über der ersten inneren Keramikschicht (2a) angeordnet ist, wobei die erste und die zweite innere und äußere Keramikschicht (2a, 2b) chemisch und thermisch kompatibel sind, wobei die Wärmesperre mindestens einen Zusammenstellungs- (G2) und Porositätsgradienten (G1) mit einer Porengröße aufweist, der sich von der zweiten äußeren Keramikschicht (2b) zu der ersten inneren Keramikschicht (2a) erhöht,
wobei die zweite äußere Keramikschicht (2b) konfiguriert ist, um Eigenschaften physiochemischer Beständigkeit gegenüber Schadstoffen in der Art von Kalzium-, Magnesium- und Aluminosilikatoxiden und/ oder Wärmebeständigkeit aufzuweisen, die größer als jene der ersten inneren Keramikschicht (2a) sind,
wobei die erste und die zweite innere und äußere Keramikschicht (2a, 2b) aus Verbindungen aus teilweise mit Yttrium stabilisiertem Zirkonium ("YSZ"), aus Verbindungen aus teilweise mit Yttrium, das mit Gadoliniumoxid dotiert ist, stabilisiertem Zirkonium ("GYSZ"), aus Lanthan-Zirkonat-Verbindungen (La₂Zr₂O₇) ("LZ"), und aus teilweise cerierten Lanthan-Zirkonat-Verbindungen ("LZC") ausgewählt werden, und
die erste und die zweite innere/äußere Keramikschicht (2a, 2b) aus den folgenden Paaren ausgewählt werden:
- xYSZ/LZ mit einem Massenprozentsatz x an Yttrium größer oder gleich 7 Masse-%,
- xYSZ/LZC mit einem Massenprozentsatz x an Yttrium gleich 7 % und
- xYSZ/GYSZ mit einem Massenprozentsatz x an Yttrium gleich 8 %.

2. Verfahren nach Anspruch 1, **dadurch gekennzeichnet, dass** die erste innere Keramikschicht (2a) einen Wärmeausdehnungskoeffizienten größer als jener der zweiten äußeren Keramikschicht (2b) aufweist.

3. Verfahren nach einem der Ansprüche 1 oder 2, **dadurch gekennzeichnet, dass** sich die Eigenschaften physiochemischer Beständigkeit der zweiten äußeren Keramikschicht (2b) auf das Sintern, die Korrosion, der Erosion und/oder die Aerodynamik beziehen, wobei sich diese Eigenschaften, die durch eine Wahl der Keramiken umgesetzt werden, jeweils auf eine geeignete und durch die Wärmebehandlung der SPS-Maschine verstärkte Wärmeleitfähigkeit, Porosität, Härte und/ oder Rauheit beziehen, sodass die zweite äußere Keramikschicht (2b) mindestens Folgendes aufweist:
- eine geringere Wärmeausdehnung als jene der ersten inneren Keramikschicht (2a), und/ oder
- eine größere Härte als jene der ersten inneren Keramikschicht (2a), und/ oder
- eine geringere Wärmeleitfähigkeit als jene der ersten inneren Keramikschicht (2a), und/ oder
- eine im Wesentlichen höhere Sintertemperatur als jene der ersten inneren Keramikschicht (2a), und/ oder
- eine geringere offene Porosität als jene der ersten inneren Keramikschicht (2a), und/ oder
- eine geringere Rauheit als jene der ersten inneren Keramikschicht (2a).

4. Verfahren nach einem der vorstehenden Ansprüche, **dadurch gekennzeichnet, dass** die metallische Unterschicht (21) zwischen dem Superlegierungssubstrat (22) und der Wärmesperre angeordnet ist, die die erste und die zweite innere und äußere Keramikschicht (2a, 2b) umfasst, wobei die metallische Unterschicht eine Stapelung von Metallfolien umfasst.

5. Verfahren nach einem der vorstehenden Ansprüche, **dadurch gekennzeichnet, dass** die Einschließung (11) mit Mitteln zum Unterdrucksetzen und zum elektrischen Unterspannungsetzen (16a, 16b), sowie mit elektrischen Durchgangskontakten (12a, 14a; 12b, 14b) für gepulsten Strom in der Einschließung (11) ausgerüstet ist, wobei das Unterdrucksetzen und der gleichzeitige Durchgang von gepulstem Strom des Vorgangs des Spark-Plasma-Sinterns gemäß einem temperatur-, druck- und zeitdauergeregelten Spark-Plasma-Sinterzyklus (D_{T}, D_{P}) durchgeführt werden.

6. Verfahren nach Anspruch 5, **dadurch gekennzeichnet, dass** der Vorgang eine zweite Temperaturstufe (P2) umfasst, die zwischen 1100 und 1200°C liegt, und eine Druckstufe (P3), die zwischen 15 und 150 MPa, vorzugsweise zwischen 10 und 100 MPa liegt, sodass die Wärmesperre (23) Zusammenstellungs- (G2), Porositäts- (G1) und Funktionsgradienten von einerseits einer Verankerung in der metallischen Unterschicht (21) und andererseits eines Schutzes und/ oder einer äußeren Glättung aufweist.

7. Verfahren nach dem vorstehenden Anspruch, **dadurch gekennzeichnet, dass** der Sintervorgang vor der zweiten Temperaturstufe Folgendes umfasst:
- einen ersten Temperaturanstieg mit einer ersten Temperaturstufe (P1) von 700 °C mit einer Rampe von 100 °C pro Minute, wobei die erste Stufe (P1) eine Zeitdauer in der Größenordnung von zehn Minuten aufweist,
- einen zweiten Temperaturanstieg nach der ersten Stufe, mit einer Rampe von 100 °C pro Minute während einer Zeitdauer in der Größenordnung von zehn Minuten, und,
- einen dritten Temperaturanstieg mit einer Rampe von 50 °C pro Minute und einer Zeitdauer in der Größenordnung von fünf Minuten.

8. Verfahren nach Anspruch 7, **dadurch gekennzeichnet, dass** die Druckstufe (P3) während der Zeitdauer der ersten Stufe (P1) angewendet wird.

9. Metallteil aus Superlegierung, das mit einem Schutzsystem versehen ist, das eine Wärmesperre umfasst und gemäß dem Verfahren nach einem der vorstehenden Ansprüche hergestellt ist, **dadurch gekennzeichnet, dass** das Metallteil Folgendes umfasst:
- ein Substrat (22) aus Superlegierung auf Nickelbasis,
- eine metallische Unterschicht (21), die Beta-(Ni,Pt)AI-Phasen und/oder mit Platin angereicherte Alpha-NiPtAI Phasen aufweist,
- eine Oxidschicht TGO (25), die durch Wärmeexpansion bei der Herstellung des Teils durch Spark-Plasma-Sintern gebildet wird, und
- eine Wärmesperre (23), die durch das Verfahren aus mindestens zwei Keramikschichten auf Basis von Zirkonium (2a, 2b) gebildet wird, mit einer ersten inneren Keramikschicht (2a) und einer zweiten äußeren Keramikschicht (2b), die über der ersten inneren Keramikschicht (2a) angeordnet ist,
wobei die erste und die zweite innere und äußere Keramikschicht (2a, 2b) chemisch und thermisch kompatibel sind,
wobei die Wärmesperre mindestens einen Zusammenstellungs- (G2) und Porositätsgradienten (G1) mit einer Porengröße aufweist, der sich von der zweiten äußeren Keramikschicht (2) zu der ersten inneren Keramikschicht (2a) erhöht,
wobei die zweite äußere Keramikschicht (2b) konfiguriert ist, um Eigenschaften einer physiochemischen Beständigkeit und/oder Wärmebeständigkeit aufzuweisen, die größer als jene der ersten inneren Keramikschicht (2a) sind,
wobei die erste und die zweite innere und äußere Keramikschicht (2a, 2b) aus Verbindungen aus teilweise mit Yttrium stabilisiertem Zirkonium ("YSZ"), aus Verbindungen aus teilweise mit Yttrium, das mit Gadoliniumoxid dotiert ist, stabilisiertem Zirkonium ("GYSZ"), aus Lanthan-Zirkonat-Verbindungen (La₂Zr₂O₇) ("LZ"), und aus teilweise cerierten Lanthan-Zirkonat-Verbindungen ("LZC") ausgewählt werden, und
die erste und die zweite innere/äußere Keramikschicht (2a, 2b) aus den folgenden Paaren ausgewählt werden:
- xYSZ/LZ mit einem Massenprozentsatz x an Yttrium größer oder gleich 7 Masse-%,
- xYSZ/LZC mit einem Massenprozentsatz x an Yttrium gleich 7 % und
- xYSZ/GYSZ mit einem Massenprozentsatz x an Yttrium gleich 8 %.

10. Metallteil nach dem vorstehenden Anspruch, **dadurch gekennzeichnet, dass** die erste innere Keramikschicht (2a) einen Wärmeausdehnungskoeffizienten größer als jenem der zweiten äußeren Keramikschicht (2b) aufweist, die zweite äußere Keramikschicht (2b) eine geringere Wärmeleitfähigkeit als jene der ersten inneren Keramikschicht (2a), eine natürliche Sintertemperatur und/ oder Verwendungsschwellentemperatur höher als jene der ersten inneren Keramikschicht (2a).

11. Metallteil nach Anspruch 9 oder 10, **dadurch gekennzeichnet, dass** die Wärmesperre (23) einen Zusammenstellungs- und Porositätsgradienten (3) der metallischen Unterschicht (21) bis zur Außenseite (2e) und Funktionsgradienten von einerseits der Verankerung in der metallischen Unterschicht (21) und andererseits eines Schutzes und/oder einer Glättung der Außenseite (2e) aufweist.

12. Metallteil nach Anspruch 9 oder 10, **dadurch gekennzeichnet, dass** die LZC-Verbindungen LZyC(1-y) sind, mit y = 70%, wobei y und 1-y die ergänzenden Prozentsätze von Zirkonium und Cerium des teilweise cerierten Zirkonats repräsentieren, und die dotierten Verbindungen von YSZ tGvYSZ sind, mit einem Massenprozentsatz t an Gadoliniumoxid gleich 2 % und einem Massenprozentsatz v an YSZ gleich 8 Masse-%.

## Claims

1. Method for producing a thermal barrier (23) in a multilayered system (24) on a metal part made of superalloy with an oxide layer (25) formed by thermal growth during the method, **characterised in that** the method consists in:
- providing an assembly of layers of materials,
- introducing this assembly in an SPS machine enclosure (11),
- producing an operation by flash sintering of the assembly,
the assembly of said layers comprising a nickel-based superalloy substrate (22), a metal sub-layer (21) and thermal barrier (23), the thermal barrier comprising at least two layers of zirconium-based refractory ceramics (2a, 2b), with an inner first ceramic layer (2a) and an outer second ceramic layer (2b) disposed over the inner first ceramic layer (2a), the inner first and outer second ceramic layers being chemically and thermally compatible, said thermal barrier (23) having at least a composition (G2) and a porosity (G1) gradient with pore size increasing from said outer second ceramic layer (2b) to the inner first ceramic layer (2a),
the outer second ceramic layer being configured to have higher physicochemical resistance properties, in relation to pollutants of the calcium-magnesium-aluminium-silicate oxides type, and/or thermal resistance properties than said inner first ceramic layer (2a),
said inner first and outer second ceramic layers (2a, 2b) being selected from among compounds of zirconia partially stabilised with yttria, compounds of zirconia partially stabilised with yttria doped with gadolinium oxide "GYSZ", compounds of lanthanum zirconate (La₂Zr₂O₇) ("LZ") and compounds of partially ceriated lanthanum zirconates "LZC", and
said inner first and outer second ceramic layers (2a, 2b) are selected from among the following pairs:
- xYSZ/LZ with a percentage x by mass of yttria greater than or equal to 7 % by mass,
- xYSZ/LZC with a percentage x by mass of yttria equal to 7 % and,
- xYSZ /GYSZ, with a percentage x by mass of yttria greater equal to 8 %.

2. Method according to claim 1, **characterised in that** said inner first ceramic layer (2a) has a thermal expansion coefficient that upper than that of said outer second ceramic layer (2b).

3. Method according to either claim 1 or claim 2, **characterised in that** the physicochemical resistance properties of said outer second ceramic layer (2) relate to sintering, corrosion, erosion and/or aerodynamics, these properties being implemented by a selection of ceramics that respectively relate to a thermal conductivity, a porosity, a hardness and/or a roughness that is suitable and is reinforced by the thermal treatment of the SPS machine so that said outer second ceramic layer (2b) has at least:
- a lower thermal expansion than said inner first ceramic layer, and/or,
- a greater hardness than said inner first ceramic layer, and/or,
- a lower thermal conductivity than said inner first ceramic layer, and/or,
- a substantially higher sintering temperature than said inner first ceramic layer, and/or,
- a lower open porosity than said inner first ceramic layer, and/or,
- a less roughness than said inner first ceramic layer.

4. Method according to one of the preceding claims, **characterised in that** a metal sub-layer (21) is disposed between said superalloy substrate (22) and the thermal barrier comprising said inner first and outer second ceramic layers (2a, 2b), the metal sub-layer comprising a stack of metal sheets.

5. Method according to one of the preceding claims, **characterised in that** said enclosure (11) is equipped with pressurisation means and electric power-up means (16a, 16b) as well as electric contacts (12a, 14a; 12b, 14b) for passing pulsed current through said enclosure (11)the pressurisation and the simultaneous passage of the pulsed current of the operation by flash sintering are carried out according to a flash sintering cycle (D_{T}, D_{P}) that is temperature-, pressure- and time-controlled.

6. Method according to claim 5, **characterised in that** the operation comprising a second temperature threshold (P2) between 11000 °C and 1200 °C and a pressure threshold (P3) located between 15 MPa and 150 MPa, preferably between 10 MPa and 100 MPA, so that said thermal barrier (23) has composition (G2) and porosity (G1) gradients, and a function gradient for anchoring to said metal sub-layer (21), on the one hand, and for protecting and/or external smoothing, on the other hand.

7. Method according to the preceding claim, **characterised in that** the operation by sintering comprises previously to the second threshold temperature:
- a first temperature increase with a first temperature threshold (P1) of 700 °C with a ramp of 100 °C per minute, the first temperature threshold (P1) having a duration of approximately ten minutes,
- a second temperature increase, following the first temperature threshold (P1), with a ramp of 100 °C per minute, having a duration of approximately ten minutes, and,
- a third temperature increase with a ramp of 50 °C per minute and a duration of approximately five minutes.

8. Method according to claim 7, **characterised in that** the pressure threshold (P3) is applied during the first threshold (P1).

9. Metal part made of superalloy, equipped with a protection system comprising a thermal barrier and produced according to the method of any one of the preceding claims, **characterised in that** said metal part comprises:
- a nickel-based superalloy substrate (22),
- a metal sub-layer (21) having platinum enriched beta-(Ni,Pt)AI and/or alpha-NiPtAI phases, a TGO oxide layer (25) formed by thermal growth during the production of the part by flash sintering, and
- a thermal barrier (23) formed by said method from at least two zirconium-based ceramic layers (2a, 2b), with an inner first ceramic layer (2a) and an outer second ceramic layer (2b) disposed on said inner first ceramic layer, the inner first and outer second ceramic layers being thermo-mechanically compatible,
said thermal barrier (23) having at least composition (G2) and porosity (G1) gradients with pore size increasing from said outer second ceramic layer (2b) to the inner first ceramic layer (2a),
said outer second (2b) being configured to have higher physicochemical and/or thermal resistance properties than those of the inner first ceramic layer (2a), said inner first and outer second ceramic layers (2a, 2b) being selected from among compounds of zirconia partially stabilised with yttria, compounds of zirconia partially stabilised with yttria doped with gadolinium oxide "GYSZ" compounds of lanthanum zirconate (La₂Zr₂O₇) ("LZ") and compounds of partially ceriated lanthanum zirconates "LZC", and
said inner first and outer second ceramic layers (2a, 2b) are selected from among the following pairs:
- xYSZ/LZ with a percentage x by mass of yttria greater than or equal to 7 % by mass,
- xYSZ/LZC with a percentage x by mass of yttria equal to 7 % and
- xYSZ /GYSZ, with a percentage x by mass of yttria greater equal to 8 %.

10. Metal part according to the preceding claim, **characterised in that** said inner first ceramic layer (2a) has a higher thermal expansion coefficient than that of said outer second ceramic layer (2b), said outer second ceramic (2b) having substantially lower thermal conductivity than that of said inner first ceramic layer (2a), and a natural sintering temperature and/or a maximum operating temperature that is higher than that of said inner first ceramic layer (2a).

11. Metal part according to either claim 9 or claim 10, **characterised in that** said thermal barrier (23) has a composition and a porosity gradient (3) from said metal sub-layer (21) to said outer face (2e), and a functions gradient for anchoring to said metal sub-layer (21), on the one hand, and for protecting and/or smoothing said outer face (2e), on the other hand.

12. Metal part according to either claim 9 or claim 10, **characterised in that** the LZC compounds are LZyC(1-y), with y = 70 %, y and 1-y representing the additional percentages of zirconium and partially ceriated zirconate cerium, and the doped YSZ compounds are tGvYSZ, with a percentage t by mass of gadolinium oxide equal to 2 % and a percentage v by mass of YSZ equal to 8 % by mass.
